# EUROPÄISCHE PATENTSCHRIFT

(11) **EP 1 722 993 B1**
(45) Veröffentlichungstag und Bekanntmachung des Hinweises auf die Patenterteilung: **16.02.2011**
(21) Anmeldenummer: 05715040.1
(22) Anmeldetag: 01.03.2005
(51) Int. Cl.: B60J 7/20

(54) **CABRIOLET-FAHRZEUG**
CONVERTIBLE VEHICLE
CABRIOLET

(30) Priorität: 02.03.2004 DE 102004010628
(43) Veröffentlichungstag der Anmeldung: 22.11.2006
(73) Patentinhaber: Wilhelm Karmann GmbH, 49084 Osnabrück (DE)
(72) Erfinder: IM SANDE, Holger, 26133 Oldenburg (DE); HOFFMEYER, Ulrich, 48496 Hopsten (DE)
(74) Vertreter: Kronthaler, Schmidt & Coll.
(86) Internationale Anmeldenummer: PCT/DE2005/000339
(87) Internationale Veröffentlichungsnummer: WO 2005/084982

(56) Entgegenhaltungen:
- EP-A- 0 502 295
- DE-A1- 10 039 683
- DE-A1- 10 252 987
- DE-A1- 19 813 347

## Beschreibung

Die Erfindung betrifft ein Cabriolet-Fahrzeug mit einem unterhalb eines Verdeckkastendeckels ablegbaren Dach nach dem Oberbegriff des Anspruchs 1.

Es sind Cabriolet-Fahrzeuge bekannt, bei denen jeweils das geöffnete und in einem Verdeckkasten abgelegte Dach gegen Bewegungen während der Fahrt - etwa beim Überfahren von Schlaglöchern oder anderen Unebenheiten - nicht nur durch seine eigene Mechanik, sondern auch durch äußere Druckeinwirkung fixiert wird.

Die DE 198 13 347 C2 zeigt einen hierfür geeigneten Niederhalter, der aus einem verschleißarmen Kunststoff gebildet ist und an der Unterseite eines beweglichen Deckelteils eines Verdeckkastens angebracht werden kann.

Da in der Fertigung von Fahrzeugkarosserien erhebliche Toleranzen auftreten und das Dach in Anpassung an diese Toleranzen in dem Rohbau zu montieren ist, variiert je nach Fahrzeug die relative Lage des Daches zum Heckdeckel. So kann der Höhenabstand durch Ausgleich von Fertigungstoleranzen im Rohbau um mehrere Millimeter nach oben oder unten von einem idealen Normabstand abweichen.

Eine Vergrößerung dieses Abstandes bei geöffnetem Dach und geschlossenen Deckelteil kann eine Funktionseinschränkung der Niederhalter bewirken, da diese dann nicht mehr mit hinreichendem Druck auf das abgelegte Dach pressen, so daß eine zu große Bewegungsfreiheit für das Dach resultiert.

Ein zu kleiner Abstand bewirkt hingegen einen zu großen Druck, woraus Verschleiß am Niederhalter und/oder am Dach resultiert, das aufgrund der zu starken Pressung in Falten mit zu engen Biegeradien liegen und zudem an den Kontaktstellen zu den Niederhaltern Beschädigungen erleiden kann.

Die gattungsbilderde EP 0502295 zeigt einen Niederhalter, der zum Ausgleich von Toleranzen höhenverstellbar ist.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1. Hinsichtlich weiterer vorteilhafter Ausgestaltungen der Erfindung wird auf die abhängigen Ansprüche 2 bis 5 verwiesen.

Mit der Erfindung kann den Toleranzen aus der Rohbaufertigung und aus der Anpassung der Dachlage hieran auch dauerhaft und nachkontrollierbar Rechnung getragen werden. Die Einstellbarkeit der Länge der abwärts weisenden Komponente ermöglicht einen konstanten Anpreßdruck der Niederhalter auf das Dach, so daß auch bei von der Norm abweichender Lage des Daches im Rohbau weder der Verschleiß des Daches noch des Niederhalters erhöht noch die Funktion eingeschränkt ist. Mit der Fixierbarkeit des Maßes der Einstellung ist je nach Lage des Daches in der Karosserie eine Voreinstellung des Niederhalters ermöglicht. Die Einstellung kann sehr einfach über eine Mutter geschehen, die die Eindringtiefe begrenzt.

Der Verschleiß des Daches ist zusätzlich minimiert, wenn die Niederhalter mit zentrierzapfen oder ähnlichen metallischen Halteteilen des Daches zusammenwirken, ohne insbesondere auf einen relativ empfindlichen Dachbezug zu drücken. Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: ein schematisch dargestelltes erfin- dungsgemäßes Cabriolet-Fahrzeug in per- spektivischer Ansicht von schräg hinten bei vollständig geschlossenem Dach, wo- bei die Darstellung an der vertikalen Längsmittelebene abgebrochen ist,

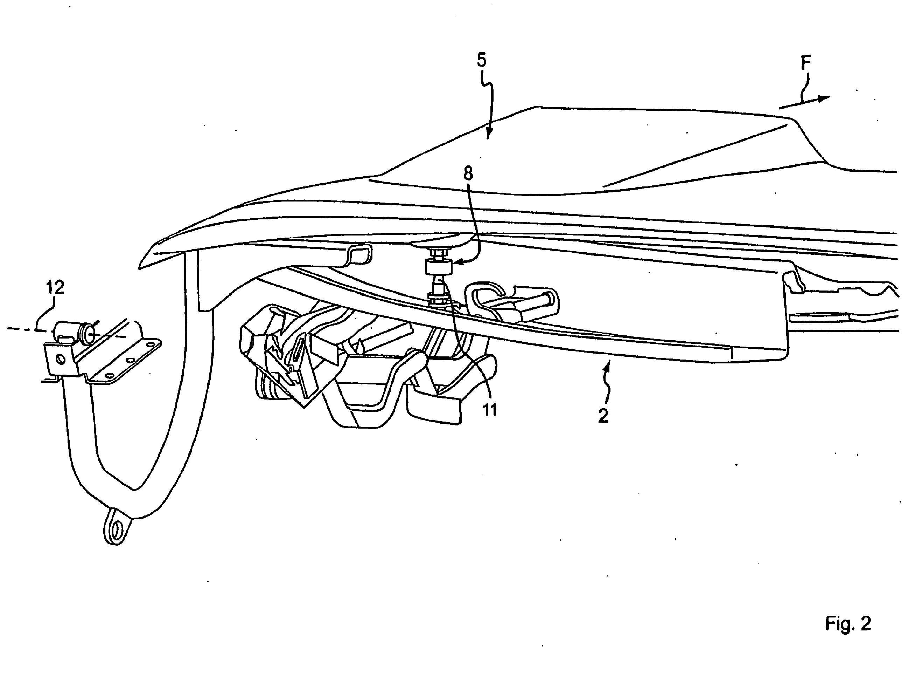

- Fig. 2: eine Detailansicht auf das geöffnete und unterhalb des Verdeckkastendeckels lie- gende Dach, in etwa entsprechend einer Ansicht aus Richtung II in Fig. 1,

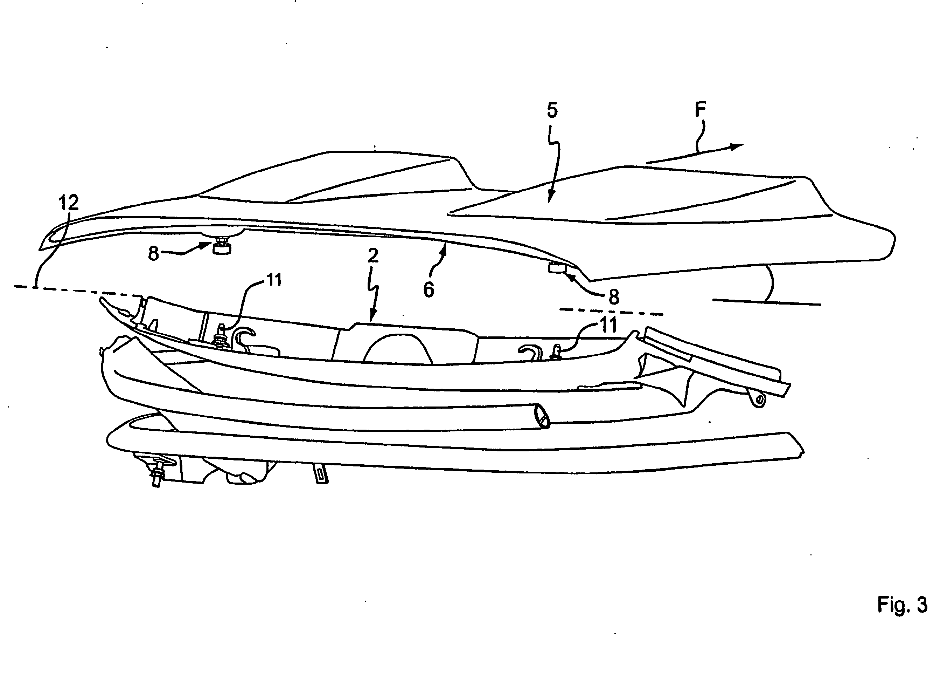

- Fig. 3: eine ähnliche Ansicht wie Fig. 2 auf das geöffnete Dach bei einem um etwa 30° ge- öffneten Verdeckkastendeckel,

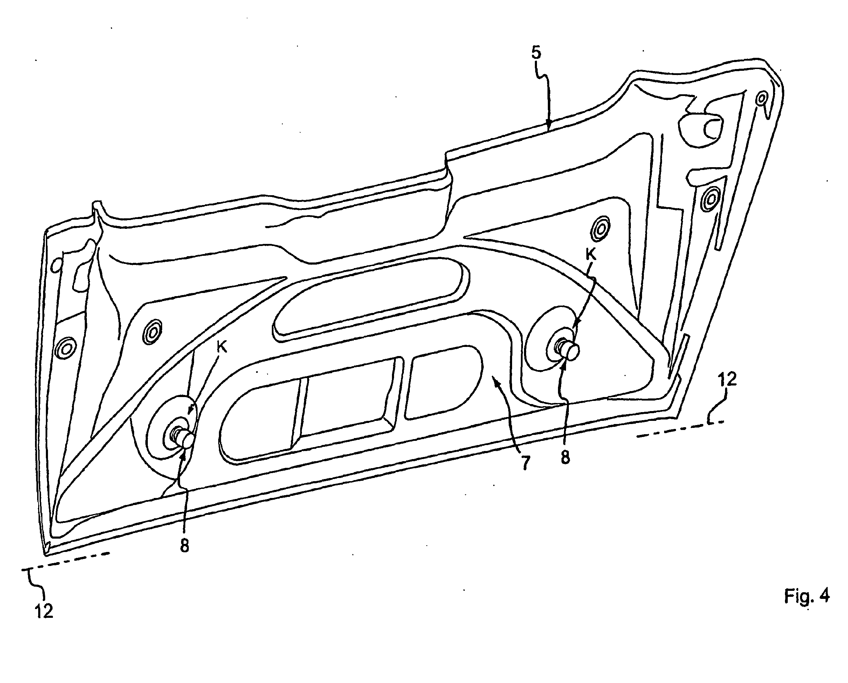

- Fig. 4: eine Ansicht von schräg vorne auf den geöffneten Verdeckkastendeckel,
- Fig. 5: eine Detailansicht eines Niederhalters in Einzelteildarstellung

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

Es umfaßt ein bewegliches Dach 2, das zumindest hier außerhalb einer Heckscheibe 4 einen flexiblen Dachbezug 3 aufweist, was nicht zwingend ist. Im gezeichneten Ausführungsbeispiel erstreckt sich der Bezug 3 über das gesamte bewegliche Dach 2.

Das Dach 3 ist zu seiner Öffnung im rückwärtigen Fahrzeugbereich unterhalb eines Verdeckkastendeckels 5 ablegbar. Die Ablagebewegung kann ein Verschwenken oder eine Überlagerung von translatorischen und rotatorischen Bewegungen um seitliche, in der Karosserie 6 gelegene Hauptlager sein.

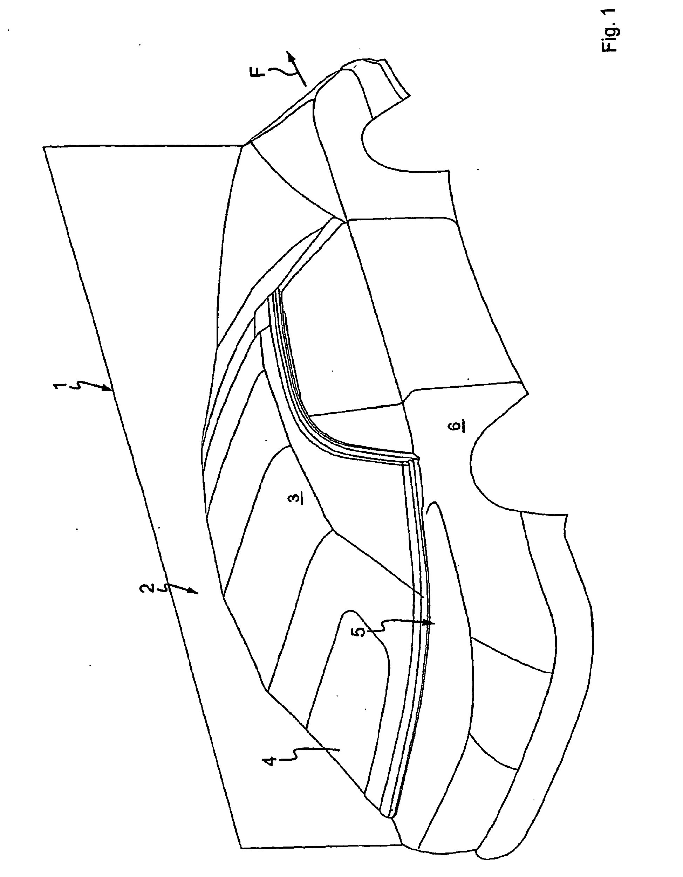

In geschlossener Dachstellung (Fig. 1) kann das hintere Dachende auf dem Verdeckkastendeckel 5 aufstehen.

Der Verdeckkastendeckel 5 überdeckt das Dach 2 in dessen geöffneter Stellung nicht nur, sondern dieses ist auch mit Hilfe des Verdeckkastendeckels 5 in seiner Lage fixierbar.

Hierfür weist der Verdeckkastendeckel 5 auf seiner bei geschlossenem Dach nach unten weisenden Seite 7 zumindest einen, hier zwei in Fahrzeugquerrichtung zueinander beabstandete Niederhalter 8 auf. Diese weisen hier bei geschlossenem Verdeckkastendeckel 5 im wesentlichen senkrecht nach unten. Sie könnten auch schräg stehen. Zumindest weisen sie in geschlossenem Zustand des Verdeckkastendeckels 5 eine abwärts weisende Erstreckungskomponente K auf.

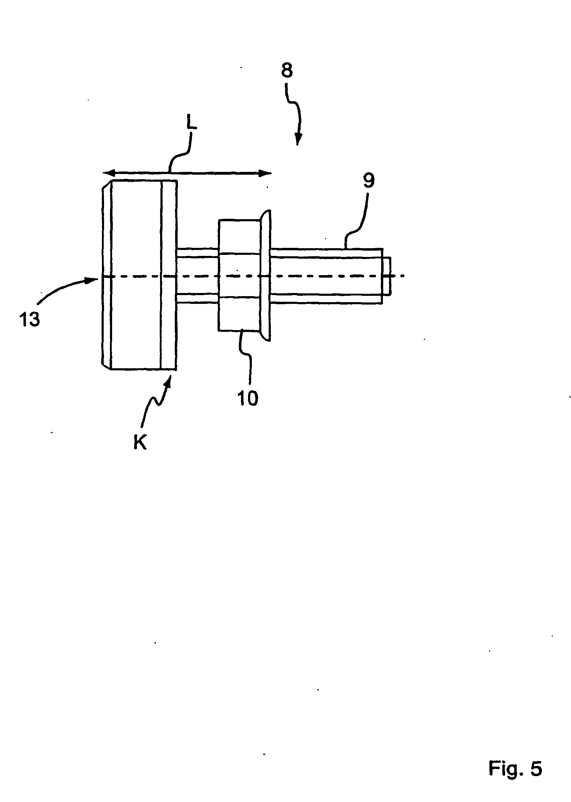

Die freie, über den Verdeckkastendeckel 5 hinausragende Länge L der abwärts weisenden Komponente K ist erfindungsgemäß verstellbar. Im Ausführungsbeispiel (Fig. 5) sind die Niederhalter 8 über Gewinde 9 in den Verdeckkastendeckel 5 eindrehbar und an diesem festlegbar. Die Eindrehbarkeit wird begrenzt durch je eine Überwurfmutter 10, die voreinstellbar auf dem Gewinde 9 halterbar ist, so daß ein vorgewähltes Maß der Einstellung fixierbar ist.

Das Gewinde 9 wird dann so weit in den Verdeckkastendeckel 5 eingedreht, wie es die vormontierte Mutter 10 als Begrenzung der Eindringtiefe zuläßt. Die Mutter 10 kann anschließend nachgezogen werden. Auch andere Mechanismen der Längeneinstellbarkeit, etwa auch federbelastete, sind möglich. Auch kann es sein, daß das Dach beim ersten Schließen des Verdeckkastendeckels 5 die Niederhalter 8 auf ein passendes Maß eindrückt und diese dann nach Art einer Ratsche in diesem Maß gehalten sind.

Neben der Höheneinstellbarkeit kann der Niederhalter 8 eventuell in seiner Neigung und in Längs- und/oder Querrichtung verstellbar sein. Vorteilhaft bleibt ein Nachstellen während der gesamten Betriebsdauer des Fahrzeugs 1 möglich, so daß etwa nach einem Wechsel des Daches erneut eine Optimierung vorgenommen werden kann.

Bei geöffnetem Dach 2 weist die Dachspitze, die in geschlossener Stellung am Windschutzscheibenrahmen verriegelt ist, mit ihrer Innenseite nach oben, so daß etwa Zentrierzapfen 11 als Widerlager für die abwärts weisenden Niederhalter 8 verwendet werden können. Dadurch stehen massive Metallteile als widerlager zur Verfügung, deren Verschleiß durch das Aufdrücken der Niederhalter 8 zu vernachlässigen ist.

Zur Überprüfung der korrekten Einstellung der Niederhalter 8 kann ein zusätzlicher Drucksensor im Niederhalter oder in einem Zentrierzapfen 11 vorgesehen sein.

Die Niederhalter 8 können zur Zusammenwirkung mit diesen Zentrierzapfen 11 oder ähnlichen metallischen Halteteilen einen auswärts weisenden Kopfbereich 13 mit einer Gummimischung einer Härte von 50 Shore bis 70 Shore aufweisen. Typisch sind 60 Shore. Dadurch ist auch sichergestellt, daß die Zentrierzapfen 11 selbst nicht verschlissen werden. An den Kopfbereich 13 kann ein Gewindestift aus beispielsweise Stahl, etwa ST 52, angegossen sein.

Besonders günstig schwenkt der Verdeckkastendeckel 5 um eine horizontale Querachse 12, so daß das Aufsetzen der Niederhalter 8 auf den Widerlagern 11 tangential zum Schwenkkreisbogen praktisch senkrecht von oben möglich ist, ohne daß es zu verschleißfördernder reibender Relativbewegung zwischen den Teilen 5, 11 käme.

Das Dach 2 kann vor seiner Montage im Karosserierohbau etwa auf einem Bock vormontiert und als fertig eingestellte modulare Einheit an den Rohbau angeliefert werden.

Die Erfindung ist sowohl bei Fahrzeugen mit manuell zu bewegenden Dächern auch bei voll- oder teilautomatischer Beweglichkeit des Daches 2 anwendbar.

## Patentansprüche

1. Cabriolet-Fahrzeug (1) mit einem im hinteren Fahrzeugbereich ablegbaren Dach (2), das in vollständig geöffneter Stellung unterhalb eines geschlossenen Verdeckkastendeckels (5) gehalten und mit dessen Hilfe in seiner Lage fixierbar ist, wobei hierfür dem Verdeckkastendeckel (5) zumindest ein Niederhalter (8) zugeordnet ist, der in geschlossenem Zustand des Verdeckkastendeckels (5) eine abwärts weisende Erstreckungskomponente aufweist, wobei die Länge (L) der abwärts weisenden Komponente verstellbar ist
**dadurch gekennzeichnet,**
**daß** ein vorgewähltes Maß der Lärgeneintellung der abwärts weisenden komponente fixierbar ist, indem der Niederhalter (8) über ein Gewinde (9) in den Verdeckkastendeckel (5) eindrehbar und die Eindringtiefe über eine aufgesetzte Mutter (10) begrenzbar ist.

2. Cabriolet-Fahrzeug (1) nach Anspruch 1,
**dadurch gekennzeichnet,**
**daß** zwei quer zum Fahrzeug (1) voneinander beabstandete Niederhalter (8) vorgesehen sind.

3. Cabriolet-Fahrzeug (1) nach Anspruch 2,
**dadurch gekennzeichnet,**
**daß** die Niederhalter (8) mit in geöffneter Dachstellung aufwärts ragenden und in geschlossener Dachstellung mit einem Windschutzscheibenrahmen zusammenwirkenden Halteteilen (11) des Daches (2) zusammenwirken.

4. Cabriolet-Fahrzeug (1) nach Anspruch 3,
**dadurch gekennzeichnet,**
**daß** die Halteteile von Zentrierzapfen (11) gebildet sind.

5. Cabriolet-Fahrzeug (1) nach einem der Ansprüche 1 bis 4,
**dadurch gekennzeichnet,**
**daß** der oder die Niederhalter (8) einen auswärts weisenden Kopfbereich (13) mit einer Gummimischung einer Härte von 50 Shore bis 70 Shore aufweist oder aufweisen.

## Claims

1. A cabriolet vehicle (1) with a roof (2) which can be stored in the rear vehicle area, the roof in its completely opened position being held below a closed folding-top compartment cover (5) and capable of being fixed at its location with the help of the cover, wherein for this purpose at least one holding down device (8) is attached to the folding-top compartment cover (5), which in the closed state of the folding-top compartment cover (5) has a downward facing extension component, wherein the length (L) of the downward facing component is adjustable,
**characterised in that**
a preselected measure of the length setting can be fixed by the holding down device (8) being capable of being screwed into the folding-top compartment cover (5) via a thread (9) and by the depth of penetration being capable of being limited via a fitted nut (10).

2. The cabriolet vehicle (1) according to Claim 1,
**characterised in that**
two holding down devices (8) are provided which are spaced apart in a transverse direction in relation to the vehicle (1).

3. The cabriolet vehicle (1) according to Claim 2,
**characterised in that**
the holding down devices (8) co-operate with holding members (11) of the roof (2) which project upwardly when the roof is in its opened position and which co-operate with a windscreen frame when the roof is in its closed position.

4. The cabriolet vehicle (1) according to Claim 3,
**characterised in that**
the holding members are formed by centering pins (11).

5. The cabriolet vehicle (1) according to one of Claims 1 to 4,
**characterised in that**
the holding down device(s) (8) has/have an outwardly facing head area (13) with a rubber mixture having a hardness of 50 Shore to 70 Shore.

## Revendications

1. Véhicule cabriolet (1) avec un toit (2) pouvant être rangé dans la zone arrière du véhicule et qui, en position complète d'ouverture, est maintenu au-dessous d'un couvercle de logement de capote fermé (5) et à l'aide duquel il peut être fixé dans sa position, à cet effet au moins un dispositif de maintien (8) étant affecté au couvercle de logement de capote (5) et qui, en position de fermeture du couvercle de logement de capote (5), présente un élément de prolongation dirigé vers le bas, la longueur (L) de l'élément dirigé vers le bas étant réglable,
**caractérisé en ce**
**qu'**une mesure prédéfinie du réglage en longueur de l'élément dirigé vers le bas peut être déterminée, le dispositif de maintien (8) pouvant être vissé par l'intermédiaire d'un filet (9) dans le couvercle de logement de capote (5) et la profondeur de pénétration pouvant être délimitée au moyen d'un écrou monté (10).

2. Véhicule cabriolet (1) conformément à la revendication 1,
**caractérisé en ce**
**qu'**il est prévu deux dispositifs de maintien (8) à distance l'un de l'autre et transversaux par rapport au véhicule (1).

3. Véhicule cabriolet (1) conformément à la revendication 2,
**caractérisé en ce que**
les dispositifs de maintien (8) coopèrent avec des pièces de maintien (11) du toit (2) faisant saillie vers le haut en position ouverte du toit et, en position fermée du toit, avec un cadre de pare-brise combiné.

4. Véhicule cabriolet (1) conformément à la revendication 3,
**caractérisé en ce que**
les pièces de maintien sont formées par des ergots de centrage (11).

5. Véhicule cabriolet (1) conformément à l'une des revendications 1 à 4,
**caractérisé en ce que**
le ou les dispositifs de maintien (8) présente ou présentent une zone de tête (13) dirigée vers l'extérieur avec un mélange de caoutchouc d'une dureté de 50 shore à 70 shore.
